(19) Europäisches Patentamt / European Patent Office / Office européen des brevets

(11) **EP 2 695 275 B1**

(12) **FASCICULE DE BREVET EUROPEEN**

(45) Date de publication et mention de la délivrance du brevet:
**06.06.2018 Bulletin 2018/23**

(21) Numéro de dépôt: **12712127.5**

(22) Date de dépôt: **05.04.2012**

(51) Int Cl.:
*H02J 3/38* (2006.01)    *H02P 9/00* (2006.01)
*F03D 9/00* (2016.01)    *H02H 7/06* (2006.01)

(86) Numéro de dépôt international:
**PCT/EP2012/056364**

(87) Numéro de publication internationale:
**WO 2012/136814 (11.10.2012 Gazette 2012/41)**

(54) **CHAINE D'ENTRAINEMENT COMPRENANT UNE MACHINE ELECTRIQUE DOUBLEMENT ALIMENTEE ET UN CONVERTISSEUR CONTINU-ALTERNATIF COMMANDE SUIVANT UNE LOI LIMITANT LA PUISSANCE ACTIVE DÉLIVRÉE**

ANTRIEBSKETTE MIT EINER DOPPELTGESPEISTEN ELEKTRISCHEN MASCHINE UND EINEM NACH EINEM GESETZ ZUR BEGRENZUNG DER ABGEGEBEN WIRKLEISTUNG GESTEUERTEN WECHSELRICHTER

DRIVE CHAIN COMPRISING A DOUBLY-FED ELECTRIC MACHINE AND AN INVERTER CONTROLLED ACCORDING TO A LAW LIMITING THE DELIVERED ACTIVE POWER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.04.2011 FR 1152938**

(43) Date de publication de la demande:
**12.02.2014 Bulletin 2014/07**

(73) Titulaire: **GE Energy Power Conversion Technology Limited**
**Rugby**
**Warwickshire CV21 1BU (GB)**

(72) Inventeur: **PERMUY, Alfred**
**F-92500 Rueil Malmaison (FR)**

(74) Mandataire: **Serjeants LLP**
**Dock**
**75 Exploration Drive**
**Leicester, LE4 5NU (GB)**

(56) Documents cités:
**DE-A1-102008 009 276    US-A1- 2010 117 605**

• **RAHIMI M ET AL: "Grid-fault ride-through analysis and control of wind turbines with doubly fed induction generators", ELECTRIC POWER SYSTEMS RESEARCH, ELSEVIER, vol. 80, no. 2, 1 février 2010 (2010-02-01), pages 184-195, XP026785720, ISSN: 0378-7796, DOI: 10.1016/J.EPSR.2009.08.019 [extrait le 2009-10-02]**
• **ALI H KASEM ET AL: "A New Fault Ride-through Strategy for Doubly Fed Wind-Power Induction Generator", ELECTRICAL POWER CONFERENCE, 2007. EPC 2007. IEEE CANADA, IEEE, PISCATAWAY, NJ, USA, 25 octobre 2007 (2007-10-25), pages 1-7, XP031252669, ISBN: 978-1-4244-1444-4**

## Description

La présente invention concerne une chaîne d'entraînement propre à être reliée à un réseau électrique alternatif et comprenant

- une machine électrique comportant un rotor et un stator, le stator étant propre à être électriquement relié au réseau alternatif et présentant une fréquence statorique,
- un système bidirectionnel de conversion d'un courant électrique alternatif en un autre courant électrique alternatif, propre à être connecté entre le réseau alternatif et le rotor de la machine électrique, le système bidirectionnel de conversion comportant :

  + un convertisseur bidirectionnel de courant alternatif en courant continu propre à être connecté au réseau alternatif,
  + un convertisseur bidirectionnel de courant continu en courant alternatif connecté entre le convertisseur alternatif-continu et le rotor, le convertisseur continu-alternatif comportant des interrupteurs électroniques commandables propres à convertir une tension continue en une tension alternative, et une borne de connexion avec le rotor pour chaque phase de la tension alternative, et
  + un dispositif de commande des interrupteurs du convertisseur continu-alternatif suivant une loi de commande.

L'invention concerne également une installation de génération d'énergie électrique à destination d'un réseau électrique alternatif, l'installation comprenant une turbine et une telle chaîne d'entraînement connectée à la turbine, d'une part, et propre à être reliée au réseau alternatif, d'autre part. L'invention s'applique notamment à une éolienne, ou à une installation hydroélectrique.

On connaît du document « Grid connection of doubly fed induction generator wind turbines : a survey", de Martinez de Alegria et al., une chaîne d'entraînement du type précité. La chaîne d'entraînement est reliée à un réseau triphasé et comprend une machine électrique doublement alimentée, le stator de la machine étant connecté au réseau triphasé et le rotor étant alimenté par l'intermédiaire d'un convertisseur triphasé-triphasé connecté au réseau triphasé. Le convertisseur comporte un redresseur connecté au réseau triphasé et un onduleur connecté entre le redresseur et le rotor de la machine. Lorsqu'un défaut, tel qu'un court-circuit se produit sur le réseau triphasé, la chaîne d'entraînement est tenue de respecter certaines règles imposées par le réseau électrique (de l'anglais grid code), comme par exemple le réseau électrique allemand, ou encore le réseau électrique anglais, afin de permettre au réseau de maîtriser ce défaut (de l'anglais Fault Ride Through - FRT). Une chaîne d'entraînement du type précité est aussi connu du document DE 10 2008 009 276 A1. Un tel court-circuit sur le réseau électrique entraîne une augmentation importante de la tension induite au rotor de la machine électrique. Le document précité envisage alors différentes solutions pour éviter une détérioration de la chaîne d'entraînement, et en particulier du convertisseur, suite à cette augmentation de la tension induite tout en respectant les règles du réseau électrique concerné. De multiples solutions sont envisagées, telles que l'ajout d'un dispositif de protection contre les surtensions et/ou les surintensités connecté entre les bornes de sortie de l'onduleur du côté alternatif, ou encore l'ajout de thyristors connectés en anti-parallèle entre le réseau électrique et le stator de la machine pour chaque phase du courant alternatif. Une solution préférentielle est l'ajout du dispositif de protection contre les surtensions et/ou les surintensités en combinaison avec un contrôle du flux rotorique via une commande particulière du convertisseur connecté entre le rotor et le réseau.

Toutefois, ces différentes solutions nécessitent d'adjoindre à la machine électrique doublement alimentée un dispositif additionnel de protection, tel qu'un dispositif de protection contre les surtensions et/ou les surintensités ou des thyristors connectés en anti-parallèle entre le réseau électrique et le stator de la machine.

Le but de l'invention est de proposer une chaîne d'entraînement destinée à être reliée à un réseau électrique alternatif et respectant les règles de ce réseau en cas de défaut sur le réseau, tel qu'un court-circuit, tout en ne nécessitant pas un tel dispositif additionnel de protection.

A cet effet, l'invention a pour objet une chaîne d'entraînement du type précité, caractérisée en ce que la loi de commande est telle que la puissance active échangée par le convertisseur continu-alternatif avec le rotor est inférieure à 0,3 fois la puissance nominale du courant continu propre à circuler entre le convertisseur alternatif-continu et le convertisseur continu-alternatif, pour les fréquences d'un intervalle cible compris entre 0,6 fois la fréquence statorique et 1,4 fois la fréquence statorique, et telle que ladite puissance active échangée est, pour les fréquences de l'intervalle cible, supérieure à 0,3 fois la puissance nominale, seulement pendant une période transitoire inférieure à 30ms suite à l'apparition d'un défaut sur le réseau alternatif. Suivant d'autres modes de réalisation, la chaîne d'entraînement comprend une ou plusieurs des caractéristiques suivantes, prises isolément ou suivant toutes les combinaisons techniquement possibles :

- la loi de commande est telle que la puissance active échangée par le convertisseur continu-alternatif est inférieure à 0,2 fois ladite puissance nominale pour les fréquences de l'intervalle cible ;

- l'intervalle cible est compris entre 0,7 fois la fréquence statorique et 1,3 fois la fréquence statorique, de préférence compris entre 0,9 fois la fréquence statorique et 1,1 fois la fréquence statorique, de préférence encore compris entre 0,95 fois la fréquence statorique et 1,05 fois la fréquence statorique ;
- la chaîne d'entraînement comprend en outre un premier capteur de mesure de la tension continue entre le convertisseur alternatif-continu et le convertisseur continu-alternatif, un deuxième capteur d'acquisition de la forme d'onde du courant alternatif aux bornes du convertisseur continu-alternatif, et le dispositif de commande comprend des moyens d'asservissement de ladite tension continue pour les fréquences de l'intervalle cible ;
- les moyens d'asservissement comportent un régulateur de détermination d'une correction de ladite tension continue et un filtre passe-bande de sélection de la forme d'onde du courant alternatif pour les fréquences de l'intervalle cible, les fréquences inférieure et supérieure du filtre passe-bande correspondant à l'intervalle cible.
- la loi de commande est telle que l'amplitude maximale de la tension alternative aux bornes du convertisseur continu-alternatif est, pour les fréquences de l'intervalle cible, inférieure à un seuil prédéterminé d'amplitude, égale à 0,3 fois la tension nominale du courant continu entre le convertisseur alternatif-continu et le convertisseur continu-alternatif, de préférence égale à 0,2 fois ladite tension nominale du courant continu, et telle que l'amplitude maximale de ladite tension alternative est, pour les fréquences de l'intervalle cible, supérieure au seuil prédéterminé d'amplitude, seulement pendant une période transitoire inférieure à 30ms suite à l'apparition d'un défaut sur le réseau alternatif.
- la loi de commande est telle que le facteur de puissance du courant alternatif aux bornes du convertisseur continu-alternatif est inférieur à un seuil prédéterminé de facteur de puissance, égal à 0,3, de préférence égal à 0,2, et telle que ledit facteur de puissance est, pour les fréquences de l'intervalle cible, supérieure au seuil prédéterminé de facteur de puissance, seulement pendant une période transitoire inférieure à 30ms suite à l'apparition d'un défaut sur le réseau alternatif;
- le convertisseur continu-alternatif est connecté directement au convertisseur alternatif-continu via un bus de circulation du courant continu, en l'absence d'un hacheur de freinage connecté au bus de circulation du courant continu ; et
- le convertisseur continu-alternatif est connecté directement entre le convertisseur alternatif-continu et le rotor, en l'absence d'un dispositif de protection contre les surtensions et/ou les surintensités connecté entre les bornes du convertisseur continu-alternatif.

L'invention a également pour objet une installation de génération d'énergie électrique à destination d'un réseau électrique alternatif, l'installation comprenant une turbine et une chaîne d'entraînement connectée à la turbine, d'une part, et propre à être reliée au réseau alternatif, d'autre part, caractérisée en ce que la chaîne d'entraînement est telle que définie ci-dessus, la machine électrique étant un générateur connecté à la turbine, et le stator du générateur étant propre à être connecté au réseau alternatif.

Ces caractéristiques et avantages de l'invention apparaîtront à la lecture de la description qui va suivre, donnée uniquement à titre d'exemple, et faite en référence aux dessins annexés, sur lesquels :

- la figure 1 est une représentation schématique d'une installation de génération d'énergie électrique comprenant une chaîne d'entraînement propre à être reliée à un réseau électrique alternatif,
- la figure 2 est une représentation schématique d'un dispositif de commande d'interrupteurs d'un convertisseur continu-alternatif de la chaîne d'entraînement de la figure 1 selon un premier mode de réalisation, et
- la figure 3 est une vue analogue à celle de la figure 2 selon un deuxième mode de réalisation de l'invention.

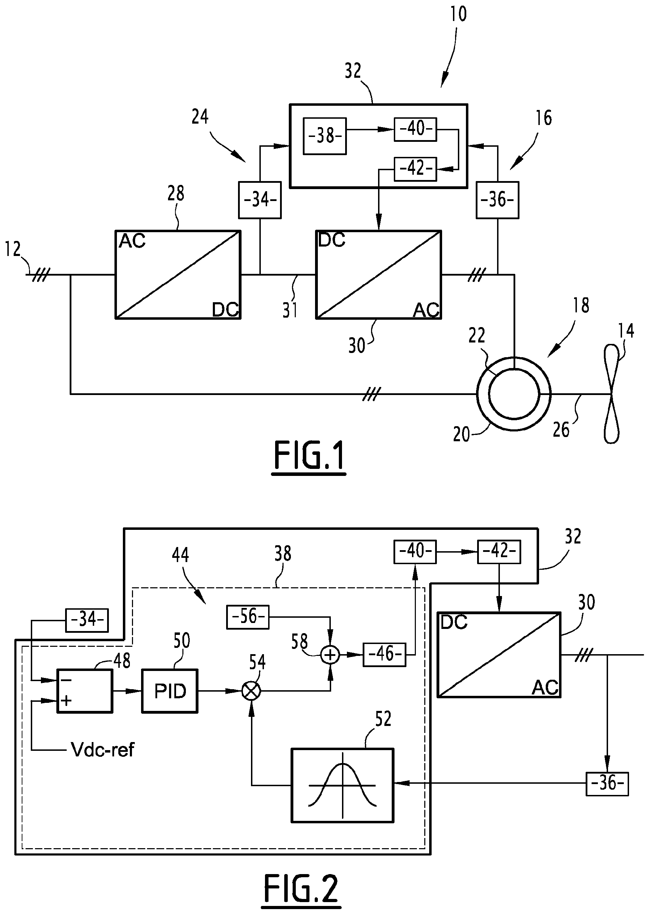

Sur la figure 1, une installation 10 de génération d'énergie électrique à destination d'un réseau électrique alternatif 12 comprend une turbine 14 et une chaîne d'entraînement 16 connectée à la turbine, d'une part, et reliée au réseau alternatif, d'autre part.

L'installation de génération d'énergie électrique 10 est, par exemple, une éolienne.

En variante, l'installation de génération d'énergie électrique est une installation hydroélectrique.

Le réseau électrique alternatif 12 est, par exemple, un réseau triphasé de fréquence sensiblement égale à 50 Hz. En variante, la fréquence du réseau alternatif est sensiblement égale à 60 Hz.

Le réseau électrique 12 présente, par exemple, une tension de l'ordre de 1 kV dans le cas d'une éolienne. En variante, le réseau électrique présente une tension de l'ordre de 33 kV dans le cas d'une installation hydroélectrique.

Le réseau alternatif 12 est généralement relié à un réseau haute tension par l'intermédiaire d'un transformateur de tension, non représenté. Le réseau haute tension présente, par exemple, une tension de l'ordre de 33 kV dans le cas d'une éolienne. En variante, le réseau haute tension présente une tension de l'ordre de 100 kV dans le cas d'une installation hydroélectrique.

Chaque équipement électrique connecté au réseau alternatif 12 doit vérifier des règles de comportement en présence d'un défaut sur le réseau 12, tel qu'un court-circuit, afin de ne pas provoquer de défauts en cascade sur le réseau 12. Les règles du réseau électrique allemand exigent, à titre d'exemple, que l'équipement électrique soit en mesure de surmonter un défaut sur le réseau (de l'anglais Fault Ride Through - FRT) correspondant à une chute de tension à 15% de la tension nominale pendant une durée de 300 ms avec un retour à 80% de la tension nominale après une durée de 3 secondes. Les règles des autres réseaux électriques sont similaires à celles du réseau allemand.

La chaîne d'entraînement 16 comprend une machine électrique 18 comportant un stator 20 et un rotor 22, et un système bidirectionnel 24 de conversion d'un courant électrique alternatif en un autre courant alternatif, connecté entre le réseau alternatif 12 et le rotor 22 de la machine électrique.

La machine électrique 18 est une machine asynchrone. Dans l'exemple de réalisation de la figure 1, la machine électrique 18 est un générateur connecté à la turbine 14.

Le stator 20 est relié électriquement au réseau alternatif 12. Le stator 20 présente un courant statorique de vitesse angulaire $\omega_{stator}$ et de fréquence $f_{stator}$, la vitesse angulaire $\omega_{stator}$ étant égale à $2\pi$ x $f_{stator}$. La fréquence du courant statorique, également appelée fréquence statorique $f_{stator}$ est égale à la fréquence du courant alternatif du réseau 12. Le stator 20 est, par exemple, connecté directement au réseau alternatif 12.

Le rotor 22 est relié électriquement au système de conversion 24. Le rotor 22 comporte un arbre 26 mécaniquement solidaire d'un arbre de la turbine 14. L'arbre 26 du rotor présente une vitesse angulaire $\omega$ et une fréquence de rotation mécanique $f_{meca}$, la vitesse angulaire $\omega$ étant égale à $2\pi$ x $f_{meca}$. Un courant rotorique de pulsation $\omega_{rotor}$ et de fréquence $f_{rotor}$ est propre à circuler dans le rotor 22, la pulsation rotorique étant égale à $2\pi$ x $f_{rotor}$. Le rotor 22 présente P paires de pôles magnétiques.

La relation d'autopilotage de la machine asynchrone 18 vérifie alors l'équation suivante :

$$P \times \omega = \omega_{stator} - \omega_{rotor} \qquad (1)$$

Autrement dit, la fréquence statorique $f_{stator}$ et la fréquence du courant rotorique $f_{rotor}$, également appelée fréquence rotorique $f_{rotor}$, vérifient l'équation suivante :

$$P \times f_{meca} = f_{stator} - f_{rotor} \qquad (2)$$

Par convention, la fréquence rotorique $f_{rotor}$ est positive lorsque le flux de puissance à travers le système de conversion 24 est dirigé du réseau alternatif 12 vers la machine électrique 18, et est négative lorsque le flux de puissance à travers le système de conversion 24 est dirigé de la machine électrique 18 vers le réseau alternatif 12, le système de conversion 24 étant bidirectionnel. Lorsque la fréquence rotorique $f_{rotor}$ est nulle, aucun flux de puissance ne traverse le système de conversion 24, le stator 20 étant directement alimenté via le réseau alternatif 12 et la fréquence de rotation mécanique $f_{meca}$ étant égale à la fréquence statorique $f_{stator}$.

Dans le cas d'une éolienne, la valeur de la fréquence de rotation mécanique $f_{meca}$ multipliée par le nombre P de paires de pôles magnétiques est comprise entre 60% et 140% de la valeur de la fréquence statorique $f_{stator}$, de préférence comprise entre 70% et 130% de la valeur de la fréquence statorique $f_{stator}$. Autrement dit, la valeur de la fréquence rotorique $f_{rotor}$ est comprise entre -40% et 40% de la valeur de la fréquence statorique $f_{stator}$, de préférence comprise entre -30% et 30% de la valeur de la fréquence statorique $f_{stator}$.

Dans le cas d'une installation hydroélectrique, la valeur de la fréquence de rotation mécanique $f_{meca}$ multipliée par le nombre P de paires de pôles magnétiques est comprise entre 90% et 110% de la valeur de la fréquence statorique $f_{stator}$, de préférence comprise entre 95% et 105% de la valeur de la fréquence statorique $f_{stator}$. Autrement dit, la valeur de la fréquence rotorique $f_{rotor}$ est comprise entre -10% et 10% de la valeur de la fréquence statorique $f_{stator}$, de préférence comprise entre -5% et 5% de la valeur de la fréquence statorique $f_{stator}$.

Dans l'exemple de réalisation de la figure 1, la fréquence statorique $f_{stator}$ est égale 50 Hz, la fréquence de rotation mécanique $f_{meca}$ est de l'ordre de 48/P Hz, de sorte que la fréquence rotorique $f_{rotor}$ est de l'ordre de 2 Hz.

Le système de conversion 24 comporte un convertisseur bidirectionnel de courant alternatif en courant continu 28, également appelé convertisseur alternatif-continu, connecté au réseau alternatif, un convertisseur bidirectionnel de courant continu en courant alternatif 30, également appelé convertisseur continu-alternatif, connecté entre le convertisseur alternatif-continu et le rotor. Le convertisseur continu-alternatif 30 comporte des interrupteurs électroniques commandables propres à convertir une tension continue d'entrée en une tension alternative de sortie et une borne de connexion avec le rotor 22 pour chaque phase de la tension alternative.

L'homme du métier comprendra que le convertisseur bidirectionnel alternatif-continu 28 fonctionne en redresseur de tension et que le convertisseur bidirectionnel continu-alternatif 30 fonctionne en onduleur de tension, lorsque le flux de puissance à travers le système de conversion 24 est dirigé du réseau alternatif 12 vers la machine électrique 18, c'est-à-dire lorsque la fréquence rotorique $f_{rotor}$ est positive.

Inversement, l'homme du métier comprendra que le convertisseur bidirectionnel continu-alternatif 30 fonctionne en redresseur de tension et que le convertisseur bidirectionnel alternatif-continu 28 fonctionne en onduleur de tension, lorsque le flux de puissance à travers le système de conversion 24 est dirigé de la machine électrique 18 vers le réseau alternatif 12, c'est-à-dire lorsque la fréquence rotorique $f_{rotor}$ est négative.

Le système de conversion 24 comporte également un bus 31 de circulation d'un courant continu disposé entre le convertisseur alternatif-continu et le convertisseur continu-alternatif, et un dispositif 32 de commande des interrupteurs du convertisseur continu-alternatif suivant une loi de commande.

Dans l'exemple de réalisation de la figure 2, la chaîne d'entraînement 16 comprend un premier capteur 34 de mesure de la tension continue propre à circuler sur le bus continu 31 entre le convertisseur alternatif-continu et le convertisseur continu-alternatif, et un deuxième capteur 36 d'acquisition de la forme d'onde du courant alternatif aux bornes du convertisseur continu-alternatif.

Le convertisseur alternatif-continu 28, visible sur la figure 1, comporte une borne d'entrée, non représentée, pour chaque phase du courant alternatif fourni par le réseau 12, ainsi que deux bornes de sortie et un point milieu de sortie, non représentés. Le convertisseur alternatif-continu 28 est, par exemple, un convertisseur triphasé, et comporte alors trois bornes d'entrée.

Le convertisseur alternatif-continu 28 présente, par exemple, une topologie connue du type clampée par le neutre, également appelée topologie NPC (de l'anglais Neutral Point Clamped).

En variante, le convertisseur alternatif-continu 28 présente une topologie du type pilotée par le neutre, également appelée topologie NPP (de l'anglais Neutral Point Piloted). Le convertisseur alternatif-continu 28 comporte alors, pour chaque phase du courant alternatif, deux branches extrêmes et une branche intermédiaire, également appelée branche transversale. Chaque branche extrême est connectée entre une borne d'entrée respective et la borne de sortie correspondante, et comporte un interrupteur électronique commandable. La branche intermédiaire est connectée entre une borne d'entrée respective et le point milieu, et comporte deux interrupteurs connectés en anti-série.

Le convertisseur continu-alternatif 30 comporte deux bornes d'entrée et un point milieu d'entrée, non représentés, ainsi que les bornes, non représentées, de connexion avec le rotor 22, une borne de connexion étant prévue pour chaque phase du courant alternatif. Le convertisseur continu-alternatif 30 bidirectionnel comporte des interrupteurs électroniques commandables propres à convertir le courant continu fourni par le convertisseur alternatif-continu 28 en un courant alternatif délivré au rotor 22 lorsque la fréquence rotorique est positive. Inversement, lorsque la fréquence rotorique est négative, le convertisseur continu-alternatif 30 est propre à convertir le courant alternatif fourni par le rotor 22 en un courant continu délivré au convertisseur alternatif-continu 28 bidirectionnel fonctionnant alors en onduleur.

Le convertisseur continu-alternatif 30 est, par exemple, un convertisseur trois niveaux. Le convertisseur continu-alternatif 30 est, par exemple, un convertisseur clampé par le neutre, également appelé convertisseur NPC (de l'anglais Neutral Point Clamped). En variante, le convertisseur continu-alternatif 30 est un convertisseur piloté par le neutre, également appelé convertisseur NPP (de l'anglais Neutral Point Piloted).

Dans l'exemple de réalisation de la figure 1, le convertisseur continu-alternatif 30 est connecté directement au convertisseur alternatif-continu 28 via le bus de circulation du courant continu 31, en l'absence d'un hacheur de freinage (de l'anglais Dynamic Breaking Chopper, ou encore DB Chopper) connecté au bus continu 31. Le convertisseur continu-alternatif 30 est connecté directement entre le convertisseur alternatif-continu 28 et le rotor 22, en l'absence d'un dispositif de protection contre les surtensions et/ou les surintensités (de l'anglais crowbar) connecté entre les bornes de connexion au rotor du convertisseur continu-alternatif 30.

Le bus continu 31 présente la tension continue Vdc entre les deux bornes de sortie du convertisseur alternatif-continu 28, et également entre les deux bornes d'entrée du convertisseur continu-alternatif 30.

Le dispositif de commande 32 comprend un organe 38 de calcul de la loi de commande des interrupteurs du convertisseur continu-alternatif, un organe 40 de détermination des signaux de commande des interrupteurs du convertisseur continu-alternatif en fonction de la loi de commande, et un organe 42 d'application des signaux de commande aux interrupteurs du convertisseur continu-alternatif 30.

Le dispositif de commande 32 comporte une unité de traitement d'information, formée, par exemple, d'un processeur de données associé à une mémoire. L'organe de calcul 38, l'organe de détermination 40 et l'organe d'application 42 comportent, par exemple, respectivement un logiciel de calcul de la loi de commande, un logiciel de détermination des signaux de commande en fonction de la loi de commande, et un logiciel d'application des signaux de commande aux interrupteurs du convertisseur continu-alternatif. La mémoire est apte à stocker les logiciels de calcul de la loi de commande, de détermination des signaux de commande, et d'application des signaux de commande.

En variante, l'organe de calcul 38, l'organe de détermination 40 et l'organe d'application 42 sont réalisés sous forme de circuits logiques programmables dédiés.

L'organe de calcul 38 comporte des premiers moyens 44 de calcul d'une consigne de commande et des seconds moyens 44 de calcul de la loi de commande en fonction de la consigne calculée.

La loi de commande est telle que la puissance active échangée par le convertisseur continu-alternatif 30 avec le rotor 22 est sensiblement tout le temps inférieure à 0,3 fois la puissance nominale du courant continu propre à circuler entre le convertisseur alternatif-continu 28 et le convertisseur continu-alternatif 30, pour les fréquences d'un intervalle cible compris entre 0,6 fois la fréquence statorique $f_{stator}$ et 1,4 fois la fréquence statorique $f_{stator}$. Le terme 'sensiblement' signifie que la puissance active échangée est, pour les fréquences de l'intervalle cible, susceptible de présenter une valeur supérieure à 0,3 fois ladite puissance nominale, mais seulement pendant une période transitoire suite à l'apparition d'un défaut sur le réseau alternatif 12. La période transitoire est de durée inférieure à 30 ms, de préférence inférieure à 20 ms.

Dans le cas où l'installation de génération d'énergie électrique 10 est une éolienne, l'intervalle cible est de préférence compris entre 0,7 fois la fréquence statorique $f_{stator}$ et 1,3 fois la fréquence statorique $f_{stator}$.

Dans le cas où l'installation de génération d'énergie électrique 10 est une installation hydroélectrique, l'intervalle cible est, par exemple, compris entre 0,9 fois la fréquence statorique $f_{stator}$ et 1,1 fois la fréquence statorique $f_{stator}$, de préférence compris entre 0,95 fois la fréquence statorique $f_{stator}$ et 1,05 fois la fréquence statorique $f_{stator}$.

La loi de commande est telle que la puissance active échangée par le convertisseur continu-alternatif 30 est, par exemple, inférieure à 0,2 fois ladite puissance nominale pour les fréquences de l'intervalle cible.

La puissance nominale du courant continu propre à circuler sur le bus continu 31 est, par exemple égale à quelques centaines de kW dans le cas d'une éolienne, et à quelques MW dans le cas d'une installation hydroélectrique. La loi de commande est telle que la puissance active délivrée par le convertisseur continu-alternatif 30 est alors sensiblement tout le temps inférieure à quelques dizaines de kW dans le cas d'une éolienne, et à quelques centaines de kW dans le cas d'une installation hydroélectrique. La loi de commande est telle que la puissance active délivrée par le convertisseur continu-alternatif 30 est, par exemple, sensiblement tout le temps inférieure à 50 kW dans le cas d'une éolienne, et à 500 kW dans le cas d'une installation hydroélectrique.

Le dispositif de commande 32 comprend des moyens d'asservissement, pour les fréquences de l'intervalle cible, de la tension continue entre le convertisseur alternatif-continu 28 et le convertisseur continu-alternatif 30. Plus précisément, la valeur de la puissance active échangée par le convertisseur continu-alternatif 30 est fonction de l'asservissement, pour les fréquences de l'intervalle cible, de ladite tension continue. L'asservissement de ladite tension continue est tel que la puissance active échangée par le convertisseur continu-alternatif 30 est, pour les fréquences de l'intervalle cible, sensiblement toujours de valeur limitée et inférieure à 0,3 fois la puissance nominale du courant continu propre à circuler entre le convertisseur alternatif-continu 28 et le convertisseur continu-alternatif 30.

Dans l'exemple de la réalisation de la figure 2, la loi de commande est telle que l'amplitude maximale de la tension alternative aux bornes du convertisseur continu-alternatif 30 est, pour les fréquences de l'intervalle cible, sensiblement tout le temps inférieure à un seuil prédéterminé d'amplitude. Le seuil prédéterminé d'amplitude est égal à 0,3 fois la tension nominale du courant continu entre le convertisseur alternatif-continu 28 et le convertisseur continu-alternatif 30, de préférence égal à 0,2 fois ladite tension nominale du courant continu.

La tension nominale du courant continu propre à circuler sur le bus continu 31 est, par exemple égale à 1kV dans le cas d'une éolienne, et à 10 kV dans le cas d'une installation hydroélectrique. Le seuil prédéterminé d'amplitude est alors égal à 300 V dans le cas d'une éolienne, et à 3 kV dans le cas d'une installation hydroélectrique. Le seuil prédéterminé d'amplitude est de préférence égal à 200 V dans le cas d'une éolienne, et à 2 kV dans le cas d'une installation hydroélectrique.

Dans l'exemple de la réalisation de la figure 2, les premiers moyens de calcul 44 comportent un soustracteur 48 connecté au premier capteur de mesure 34 d'une part, et propre à recevoir d'autre part une valeur de référence prédéterminée Vdc-ref de la tension continue. Les premiers moyens de calcul 44 comportent également un régulateur 50 connecté en sortie du soustracteur 48, un filtre passe-bande 52 relié au deuxième capteur 36 et un multiplicateur 54 connecté aux sorties du régulateur 50 et du filtre 52. Les premiers moyens de calcul 44 comportent également des moyens 56 de détermination de la consigne de commande pour la fréquence rotorique $f_{rotor}$ et un additionneur 58 connecté aux sorties du multiplicateur 54 et des moyens de détermination 56.

Le soustracteur 48 est propre à calculer l'erreur entre la tension continue mesurée par le premier capteur 34 et la valeur de référence prédéterminée Vdc-ref.

Le régulateur 50, est, par exemple, un régulateur proportionnel intégral dérivé, également appelé régulateur PID. Le régulateur 50 est alors propre à déterminer une correction de tension continue en fonction de la tension continue de référence Vdc-ref.

Le soustracteur 48 et le régulateur 50 forment des moyens d'asservissement de la tension du bus continu 31.

Le filtre passe-bande 52 est propre à sélectionner la forme d'onde du courant alternatif pour une bande de fréquences correspondant aux fréquences de l'intervalle cible, et à atténuer la forme d'onde pour les fréquences en dehors de la bande de fréquences. La bande de fréquences du filtre passe-bande 52 présente alors une fréquence de coupure inférieure sensiblement égale à la borne inférieure de l'intervalle cible et une fréquence de coupure supérieure sensiblement égale à la borne supérieure de l'intervalle cible. Le filtre passe-bande 52 est, par exemple, un filtre du deuxième ordre.

Autrement dit, la fréquence inférieure de la bande de fréquences est égale à 0,6 fois la fréquence statorique $f_{stator}$, de préférence égale à 0,7 fois la fréquence statorique $f_{stator}$ dans le cas d'une éolienne. La fréquence inférieure de la bande de fréquences est égale à 0,9 fois la fréquence statorique $f_{stator}$, de préférence encore égale 0,95 fois la fréquence statorique $f_{stator}$ dans le cas d'une installation hydroélectrique. La fréquence supérieure de la bande de fréquences est égale à 1,4 fois la fréquence statorique $f_{stator}$, de préférence égale à 1,3 fois la fréquence statorique $f_{stator}$ dans le cas d'une éolienne. La fréquence supérieure de la bande de fréquences est égale à 1,1 fois la fréquence statorique $f_{stator}$, de préférence encore égale 1,05 fois la fréquence statorique $f_{stator}$ dans le cas d'une installation hydroélectrique.

Le multiplicateur 54 est propre à multiplier la correction de tension fournie par le régulateur 50 avec la forme d'onde pour les fréquences de l'intervalle cible issues du filtre passe-bande 52, afin de déterminer une consigne de commande pour les fréquences de l'intervalle cible, l'amplitude de la tension alternative aux bornes du convertisseur continu-alternatif étant choisie égale à la correction de tension continue pour la détermination de la consigne de commande.

Le soustracteur 48, le régulateur 50, le filtre passe-bande 52 et le multiplicateur 54 forment alors des moyens d'asservissement de la tension continue pour les fréquences de l'intervalle cible.

L'additionneur 58 est propre à additionner la consigne de commande pour les fréquences de l'intervalle cible délivrée par le multiplicateur 54 avec la consigne de commande pour la fréquence rotorique $f_{rotor}$ issue des moyens de détermination 56, afin de déterminer la consigne de commande pour l'ensemble du spectre fréquentiel, délivrée aux deuxièmes moyens de calcul 46.

Les deuxièmes moyens 46 sont alors propres à calculer la loi de commande des interrupteurs du convertisseur continu-alternatif 30 en fonction de la consigne issue de l'additionneur 58.

Ainsi, la loi de commande du convertisseur continu-alternatif 30 est telle que l'amplitude maximale de la tension alternative aux bornes du convertisseur continu-alternatif 30 est, pour les fréquences de l'intervalle cible autour de la fréquence statorique $f_{stator}$, sensiblement tout le temps inférieure au seuil prédéterminé d'amplitude. Plus précisément, la valeur de l'amplitude maximale de la tension alternative aux bornes du convertisseur continu-alternatif 30 est fonction de l'asservissement de la tension continue du bus continu 31 pour les fréquences de l'intervalle cible. L'asservissement de ladite tension continue implique que l'amplitude maximale de la tension alternative aux bornes du convertisseur continu-alternatif 30 est, pour les fréquences de l'intervalle cible, sensiblement toujours de valeur inférieure au seuil prédéterminé d'amplitude. Le terme 'sensiblement' signifie que l'amplitude maximale de ladite tension alternative est, pour les fréquences de l'intervalle cible, susceptible de présenter une valeur supérieure au seuil prédéterminé d'amplitude, mais seulement pendant une période transitoire suite à l'apparition d'un défaut sur le réseau alternatif 12. La période transitoire est de durée inférieure à 30 ms, de préférence inférieure à 20 ms, ce qui est bien moindre que la durée de la chute de tension à surmonter par l'équipement selon les règles du réseau, celle-ci étant par exemple égale à 300 ms.

En particulier, l'apparition d'un court-circuit sur le réseau alternatif 12 entraîne une augmentation significative de la tension induite au rotor 22 de la machine électrique, et la tension alternative aux bornes du convertisseur continu-alternatif 30 du côté alternatif augmente alors pour les fréquences voisines de la fréquence statorique $f_{stator}$. La loi de commande du convertisseur continu-alternatif selon l'invention permet alors de limiter l'augmentation de la tension continue sur le bus 31 lorsque la tension alternative augmente pour les fréquences de l'intervalle cible, de par l'asservissement de la tension continue pour les fréquences de l'intervalle cible, tout en ne modifiant pas les valeurs de tension pour la fréquence rotorique $f_{rotor}$, afin de conserver le contrôle du rotor 22.

La chaîne d'entraînement selon l'invention permet alors d'éviter une détérioration du système de conversion 24 lors de l'apparition d'un court-circuit sur le réseau alternatif 12, tout en respectant les règles du réseau 12. La chaîne d'entraînement ne nécessite en outre pas l'ajout d'un dispositif additionnel, tel qu'un hacheur de freinage connecté au bus de circulation du courant continu 31, ou tel qu'un dispositif de protection contre les surtensions et/ou les surintensités connecté entre les bornes du convertisseur continu-alternatif 30 du côté alternatif.

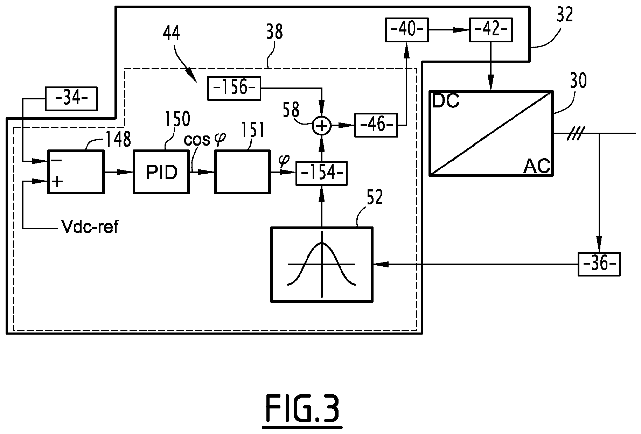

La figure 3 illustre un deuxième mode de réalisation de l'invention pour lequel les éléments analogues au premier mode de réalisation, décrit précédemment, sont repérés par des références identiques, et ne sont pas décrits à nouveau.

Selon le deuxième mode de réalisation, la loi de commande du convertisseur continu-alternatif 30 est telle que le facteur de puissance $\cos\varphi$ du courant alternatif aux bornes du convertisseur continu-alternatif 30 est sensiblement tout le temps inférieur à un seuil prédéterminé de facteur de puissance. Le seuil prédéterminé de facteur de puissance est égal à 0,3, de préférence égal à 0,2. Le terme 'sensiblement' signifie que le facteur de puissance $\cos\varphi$ est, pour les fréquences de l'intervalle cible, susceptible de présenter une valeur supérieure au seuil prédéterminé de facteur de puissance, mais seulement pendant une période transitoire suite à l'apparition d'un défaut sur le réseau alternatif 12. La période transitoire est de durée inférieure à 30 ms, de préférence inférieure à 20 ms.

Dans l'exemple de réalisation de la figure 3, la chaîne d'entraînement 16 comprend le premier capteur 34 de mesure de la tension continue propre à circuler sur le bus continu 31 et le deuxième capteur 36 d'acquisition de la forme d'onde du courant alternatif aux bornes du convertisseur continu-alternatif 30.

Dans l'exemple de réalisation de la figure 3, les premiers moyens de calcul 44 comportent un soustracteur 148 connecté au premier capteur de mesure 34 d'une part, et propre à recevoir d'autre part la valeur de référence prédéterminée Vdc-ref de la tension continue. Les premiers moyens de calcul 44 comportent un régulateur 150 connecté en sortie du soustracteur 148, des moyens 151 de détermination d'un angle de déphasage φ entre la tension et l'intensité du courant alternatif aux bornes du convertisseur continu-alternatif 30, les moyens de détermination de l'angle de déphasage 151 étant connectés en sortie du régulateur 150.

Les premiers moyens de calcul 44 comportent également le filtre passe-bande de 52 relié au deuxième capteur 36 et des premiers moyens 154 de détermination pour les fréquences de l'intervalle cible d'une consigne de commande en fonction de l'angle de déphasage φ, les premiers moyens de détermination de consigne 154 étant reliés aux sorties du régulateur 150 et du filtre 52.

Les premiers moyens de calcul 44 comportent également des seconds moyens 156 de détermination d'une consigne de commande en fonction de l'angle de déphasage φ pour la fréquence rotorique $f_{rotor}$ et un additionneur 58 connecté aux sorties des premiers et seconds moyens de détermination de consigne 154, 156.

Le soustracteur 148 est propre à calculer l'erreur entre la tension continue mesurée par le premier capteur 34 et la valeur de référence prédéterminée Vdc-ref.

Le régulateur 150, est, par exemple, un régulateur proportionnel intégral dérivé, également appelé régulateur PID. Le régulateur 150 est propre à déterminer une correction de tension continue en fonction de la tension continue de référence Vdc-ref.

Le soustracteur 148 et le régulateur 150 forment des moyens d'asservissement de la tension du bus continu 31.

Les moyens de détermination de l'angle de déphasage 151 sont propres à déterminer l'angle de déphasage φ en fonction de la correction de tension continue issue du régulateur 150, le facteur de puissance cosφ du courant alternatif aux bornes du convertisseur continu-alternatif étant choisi égal à la correction de tension continue pour la détermination de la consigne de commande.

Le filtre passe-bande 52 est propre à sélectionner la forme d'onde du courant alternatif pour une bande de fréquences correspondant aux fréquences de l'intervalle cible, et à atténuer la forme d'onde pour les fréquences en dehors de la bande de fréquences. Le filtre passe-bande 52 est identique à celui du premier mode de réalisation, et n'est donc pas décrit à nouveau.

Les premiers moyens de détermination de consigne 154 sont propres à déterminer la consigne pour les fréquences de l'intervalle cible en fonction de l'angle de déphasage φ et de la forme d'onde pour les fréquences de l'intervalle cible issues du filtre passe-bande 52.

Le soustracteur 148, le régulateur 150, les moyens de détermination de l'angle de déphasage 151, le filtre passe-bande 52 et les premiers moyens de détermination de consigne 154 forment alors des moyens d'asservissement de la tension continue pour les fréquences de l'intervalle cible.

La valeur du facteur de puissance cosφ du courant alternatif aux bornes du convertisseur continu-alternatif 30 est fonction de l'asservissement de la tension continue du bus continu 31 pour les fréquences de l'intervalle cible. L'asservissement de ladite tension continue est tel que la valeur maximale du facteur de puissance cosφ est, pour les fréquences de l'intervalle cible, sensiblement toujours de valeur inférieure au seuil prédéterminé de facteur de puissance. La valeur maximale du facteur de puissance cosφ est susceptible de présenter une valeur supérieure au seuil prédéterminé de facteur de puissance, seulement pendant une période transitoire suite à l'apparition d'un défaut sur le réseau alternatif 12. La période transitoire de durée inférieure à 30 ms, de préférence inférieure à 20 ms, est bien moindre que la durée de la chute de tension à surmonter par l'équipement selon les règles du réseau, celle-ci étant par exemple égale à 300 ms.

L'additionneur 58 est propre à additionner la consigne pour les fréquences de l'intervalle cible délivrée par les premiers moyens 154 avec la consigne pour la fréquence rotorique $f_{rotor}$ issue des seconds moyens 146, afin de déterminer la consigne de commande pour l'ensemble du spectre fréquentiel délivrée aux deuxièmes moyens de calcul 46.

Les deuxièmes moyens 46 sont alors propres à calculer la loi de commande en fonction de la consigne issue de l'additionneur 58.

Le fonctionnement de ce deuxième mode de réalisation est analogue à celui du premier mode de réalisation. La loi de commande du convertisseur continu-alternatif est telle que le facteur de puissance cosφ du courant alternatif aux bornes du convertisseur continu-alternatif 30 est sensiblement tout le temps inférieur à 0,3, de sorte que la puissance active échangée par le convertisseur continu-alternatif 30 avec le rotor est sensiblement tout le temps inférieure à 0,3 fois la puissance nominale du courant continu sur le bus continu 31.

Les avantages de ce deuxième mode de réalisation sont identiques à ceux du premier mode de réalisation, et ne sont donc pas décrits à nouveau.

On conçoit ainsi que la chaîne d'entraînement 16 selon l'invention destinée à être reliée au réseau alternatif 12 permet de respecter les règles du réseau 12 en cas de défaut sur le réseau, tel qu'un court-circuit, tout en ne nécessitant pas un dispositif additionnel de protection, tel qu'un hacheur de freinage connecté au bus de circulation du courant continu, ou tel qu'un dispositif de protection contre les surtensions et/ou les surintensités connecté les bornes du convertisseur continu-alternatif 30 du côté alternatif.

**Revendications**

1. Chaîne d'entraînement (16) propre à être reliée à un réseau électrique alternatif (12), et comprenant :

    - une machine électrique (18) comportant un rotor (22) et un stator (20), le stator (20) étant propre à être électriquement relié au réseau alternatif (12) et présentant une fréquence statorique ($f_{stator}$),
    - un système bidirectionnel (24) de conversion d'un courant électrique alternatif en un autre courant électrique alternatif, propre à être connecté entre le réseau alternatif (12) et le rotor (22) de la machine électrique, le système bidirectionnel de conversion (24) comportant :

        + un convertisseur bidirectionnel de courant alternatif en courant continu (28) propre à être connecté au réseau alternatif (12),
        + un convertisseur bidirectionnel de courant continu en courant alternatif (30) connecté entre le convertisseur alternatif-continu (28) et le rotor (22), le convertisseur continu-alternatif (30) comportant des interrupteurs électroniques commandables propres à convertir une tension continue en une tension alternative, et une borne de connexion avec le rotor (22) pour chaque phase de la tension alternative, et
        + un dispositif (32) de commande des interrupteurs du convertisseur continu-alternatif (30) suivant une loi de commande,

    **caractérisée en ce que** la loi de commande est telle que la puissance active échangée par le convertisseur continu-alternatif (30) avec le rotor (22) est inférieure à 0,3 fois la puissance nominale du courant continu propre à circuler entre le convertisseur alternatif-continu (28) et le convertisseur continu-alternatif (30), pour les fréquences d'un intervalle cible compris entre 0,6 fois la fréquence statorique ($f_{stator}$) et 1,4 fois la fréquence statorique ($f_{stator}$), et telle que ladite puissance active échangée est supérieure à 0,3 fois la puissance nominale, seulement pendant une période transitoire inférieure à 30ms suite à l'apparition d'un défaut sur le réseau alternatif (12).

2. Chaîne d'entraînement (16) selon la revendication 1, dans laquelle la loi de commande est telle que la puissance active échangée par le convertisseur continu-alternatif (30) est inférieure à 0,2 fois ladite puissance nominale pour les fréquences de l'intervalle cible.

3. Chaîne d'entraînement (16) selon la revendication 1 ou 2, dans laquelle l'intervalle cible est compris entre 0,7 fois la fréquence statorique ($f_{stator}$) et 1,3 fois la fréquence statorique ($f_{stator}$), de préférence compris entre 0,9 fois la fréquence statorique ($f_{stator}$) et 1,1 fois la fréquence statorique ($f_{stator}$), de préférence encore compris entre 0,95 fois la fréquence statorique ($f_{stator}$) et 1,05 fois la fréquence statorique ($f_{stator}$).

4. Chaîne d'entraînement (16) selon l'une quelconque des revendications précédentes, comprenant en outre un premier capteur (34) de mesure de la tension continue entre le convertisseur alternatif-continu (28) et le convertisseur continu-alternatif (30), un deuxième capteur (36) d'acquisition de la forme d'onde du courant alternatif aux bornes du convertisseur continu-alternatif (30), et le dispositif de commande (32) comprenant des moyens (48, 50, 52, 54 ; 52, 148, 150, 151, 154) d'asservissement de ladite tension continue pour les fréquences de l'intervalle cible.

5. Chaîne d'entraînement (16) selon la revendication 4, dans lequel les moyens d'asservissement comportent un régulateur (50, 150) de détermination d'une correction de ladite tension continue et un filtre passe-bande (52) de sélection de la forme d'onde du courant alternatif pour les fréquences de l'intervalle cible, les fréquences inférieure et supérieure du filtre passe-bande (52) correspondant à l'intervalle cible.

6. Chaîne d'entraînement (16) selon l'une quelconque des revendications précédentes, dans laquelle la loi de commande est telle que l'amplitude maximale de la tension alternative aux bornes du convertisseur continu-alternatif (30) est, pour les fréquences de l'intervalle cible, inférieure à un seuil prédéterminé d'amplitude, égale à 0,3 fois la tension nominale du courant continu entre le convertisseur alternatif-continu (28) et le convertisseur continu-alternatif (30), de préférence égale à 0,2 fois ladite tension nominale du courant continu, et telle que l'amplitude maximale de ladite tension est supérieure au seuil prédéterminé d'amplitude, seulement pendant une période transitoire inférieure à 30ms suite à l'apparition d'un défaut sur le réseau alternatif (12).

7. Chaîne d'entraînement (16) selon l'une quelconque des revendications 1 à 5, dans laquelle la loi de commande est telle que le facteur de puissance ($\cos\varphi$) du courant alternatif aux bornes du convertisseur continu-alternatif (30) est inférieur à un seuil prédéterminé de facteur de puissance, égal à 0,3, de préférence égal à 0,2, et telle que ledit facteur de puissance est, pour les fréquences de l'intervalle cible, supérieure au seuil prédéterminé de facteur de puissance, seulement pendant une période transitoire inférieure à 30ms suite à l'apparition d'un défaut sur le réseau alternatif (12).

8. Chaîne d'entraînement (16) selon l'une quelconque des revendications précédentes, dans laquelle le convertisseur continu-alternatif (30) est connecté directement au convertisseur alternatif-continu (28) via un bus (31) de circulation du courant continu, en l'absence d'un hacheur de freinage connecté au bus de circulation du courant continu (31).

9. Chaîne d'entraînement (16) selon l'une quelconque des revendications précédentes, dans laquelle le convertisseur continu-alternatif (30) est connecté directement entre le convertisseur alternatif-continu (28) et le rotor (22), en l'absence d'un dispositif de protection contre les surtensions et/ou les surintensités connecté entre les bornes du convertisseur continu-alternatif (30).

10. Installation (10) de génération d'énergie électrique à destination d'un réseau électrique alternatif (12), l'installation (10) comprenant une turbine (14) et une chaîne d'entraînement (16) connectée à la turbine (14), d'une part, et propre à être reliée au réseau alternatif (12), d'autre part, **caractérisée en ce que** la chaîne d'entraînement (16) est conforme à l'une quelconque des revendications précédentes, la machine électrique (18) étant un générateur connecté à la turbine (14), le stator (20) du générateur étant propre à être connecté au réseau alternatif (12).

**Patentansprüche**

1. Antriebskette (16), die geeignet ist, um an ein elektrisches Wechselstromnetz angeschlossen zu sein, und aufweist:

- eine elektrische Maschine (18), die einen Rotor (22) und einen Stator (20) enthält, wobei der Stator (20) geeignet ist, um an das Wechselstromnetz (12) elektrisch angeschlossen zu sein und eine Statorfrequenz ($f_{stator}$) aufweist,
- ein bidirektionales System (24) zur Umwandlung eines elektrischen Wechselstroms in einen anderen elektrischen Wechselstrom, das geeignet ist, um zwischen dem Wechselstromnetz (12) und dem Rotor (22) der elektrischen Maschine angeschlossen zu sein, wobei das bidirektionale Umwandlungssystem (24) aufweist:

+ einen bidirektionalen Wandler von Wechselstrom in Gleichstrom (28), der geeignet ist, um an das Wechselstromnetz (12) angeschlossen zu sein,
+ einen bidirektionalen Wandler von Gleichstrom in Wechselstrom (30), der zwischen dem Wechselstrom-Gleichstrom-Wandler (28) und dem Rotor (22) angeschlossen ist, wobei der Gleichstrom-Wechselstrom-Wandler (30) ansteuerbare elektronische Schalter, die in der Lage sind, eine Gleichspannung in eine Wechselspannung umzuwandeln, und einen Anschluss zur Verbindung mit dem Rotor (22) für jede Phase der Wechselspannung aufweist, und
+ eine Vorrichtung (32) zur Ansteuerung der Schalter des Gleichstrom-Wechselstrom-Wandlers (30) nach einem Steuerungsgesetz,

**dadurch gekennzeichnet, dass** das Steuerungsgesetz derart ist, dass die durch den Gleichstrom-Wechselstrom-Wandler (30) mit dem Rotor (22) ausgetauschte Wirkleistung für die Frequenzen eines Zielintervalls zwischen dem 0,6-fachen der Statorfrequenz ($f_{stator}$) und dem 1,4-fachen der Statorfrequenz ($f_{stator}$) kleiner als das 0,3-fache der Nennleistung des Gleichstroms ist, der in der Lage ist, zwischen dem Wechselstrom-Gleichstrom-Wandler (28) und dem Gleichstrom-Wechselstrom-Wandler (30) zu fließen, und derart ist, dass die ausgetauschte Wirkleistung nur während eines Übergangszeitraums, der weniger als 30 ms beträgt, im Anschluss auf das Auftreten eines Fehlers in dem Wechselstromnetz (12) größer als das 0,3-fache der Nennleistung ist.

2. Antriebskette (16) nach Anspruch 1, wobei das Steuerungsgesetz derart ist, dass die über den Gleichstrom-Wechselstrom-Wandler (30) ausgetauschte Wirkleistung für die Frequenzen des Zielintervalls kleiner als das 0,2-fache der Nennleistung ist.

3. Antriebskette (16) nach Anspruch 1 oder 2, wobei das Zielintervall zwischen dem 0,7-fachen der Statorfrequenz ($f_{stator}$) und dem 1,3-fachen der Statorfrequenz ($f_{stator}$) liegt, vorzugsweise zwischen dem 0,9-fachen der Statorfrequenz ($f_{stator}$) und dem 1,1-fachen der Statorfrequenz ($f_{stator}$) liegt, noch mehr bevorzugt zwischen dem 0,95-fachen der Statorfrequenz ($f_{stator}$) und dem 1,05-fachen der Statorfrequenz ($f_{stator}$) liegt.

4. Antriebskette (16) nach einem beliebigen der vorhergehenden Ansprüche, die ferner einen ersten Sensor (34) zur Messung der Gleichspannung zwischen dem Wechselstrom-Gleichstrom-Wandler (28) und dem Gleichstrom-Wechselstrom-Wandler (30), einen zweiten Sensor (36) zur Erfassung der Signalform des Wechselstroms an den Anschlüssen des Gleichstrom-Wechselstrom-Wandlers (30) aufweist und wobei die Steuervorrichtung (32) Mittel (48, 50, 52, 54; 52, 148, 150, 151, 154) zur Regelung der Gleichspannung für die Frequenzen des Zielintervalls aufweist.

5. Antriebskette (16) nach Anspruch 4, wobei die Regelungsmittel einen Regler (50, 150) zur Bestimmung einer Korrektur der Gleichspannung und ein Bandpassfilter (52) zur Auswahl der Signalform des Wechselstroms für die Frequenzen des Zielintervalls enthalten, wobei die niedrigere und höhere Frequenz des Bandpassfilters (52) dem Zielintervall entsprechen.

6. Antriebskette (16) nach einem beliebigen der vorhergehenden Ansprüche, wobei das Steuerungsgesetz derart ist, dass die maximale Amplitude der Wechselspannung an den Anschlüssen des Gleichstrom-Wechselstrom-Wandlers (30) für die Frequenzen des Zielintervalls kleiner als ein vorbestimmter Schwellenwert der Amplitude ist, der gleich dem 0,3-fachen der Nennspannung des Gleichstroms zwischen dem Wechselstrom-Gleichstrom-Wandler (28) und dem Gleichstrom-Wechselstrom-Wandler (30), vorzugsweise gleich dem 0,2-fachen der Nennspannung des Gleichstroms, ist, und derart ist, dass die maximale Amplitude der Spannung nur während eines Übergangszeitraums, der weniger als 30 ms beträgt, im Anschluss auf das Auftreten eines Fehlers in dem Wechselstromnetz (12) größer als der vorbestimmte Amplitudenschwellenwert ist.

7. Antriebskette (16) nach einem beliebigen der vorhergehenden Ansprüche 1 bis 5, wobei das Steuerungsgesetz derart ist, dass der Leistungsfaktor (cos φ) des Wechselstroms an den Anschlüssen des Gleichstrom-Wechselstrom-Wandlers (30) kleiner als ein vorbestimmter Schwellenwert des Leistungsfaktors ist, der gleich 0,3, vorzugsweise gleich 0,2 ist, und derart ist, dass der Leistungsfaktor für die Frequenzen des Zielintervalls nur während eines Übergangszeitraums, der weniger als 30 ms beträgt, im Anschluss an das Auftreten eines Fehlers in dem Wechselstromnetz (12) größer als der vorbestimmte Leistungsfaktorschwellenwert ist.

8. Antriebskette (16) nach einem beliebigen der vorhergehenden Ansprüche, wobei der Gleichstrom-Wechselstrom-Wandler (30) mit dem Wechselstrom-Gleichstrom-Wandler (28) über einen Bus (31) zur Zirkulation des Gleichstroms in Abwesenheit eines an den Bus zur Zirkulation des Gleichstroms (31) angeschlossenen Bremschoppers direkt verbunden ist.

9. Antriebskette (16) nach einem beliebigen der vorhergehenden Ansprüche, wobei der Gleichstrom-Wechselstrom-Wandler (30) in Abwesenheit einer zwischen den Anschlüssen des Gleichstrom-Wechselstrom-Wandlers (30) angeschlossenen Vorrichtung zum Schutz gegen Überspannungen und/oder Überströme direkt zwischen dem Wechselstrom-Gleichstrom-Wandler (28) und dem Rotor (22) angeschlossen ist.

10. Einrichtung (10) zur Erzeugung elektrischer Energie für ein elektrisches Wechselstromnetz (12), wobei die Einrichtung (10) eine Turbine (14) und eine Antriebskette (16) enthält, die einerseits an die Turbine (14) angeschlossen und andererseits in der Lage ist, mit dem Wechselstromnetz (12) verbunden zu sein, **dadurch gekennzeichnet, dass** die Antriebskette (16) einem beliebigen der vorhergehenden Ansprüche entspricht, wobei die elektrische Maschine (18) ein an die Turbine (14) angeschlossener Generator ist, wobei der Stator (20) des Generators in der Lage ist, mit dem Wechselstromnetz (12) verbunden zu sein.

## Claims

1. Drive chain (16) able to be connected to an alternating electrical network (12) and comprising:

- an electric machine (18) comprising a rotor (22) and a stator (20), the stator (20) being able to be connected electrically to an alternating network (12) and having a stator frequency ($f_{stator}$),
- a bidirectional system (24) for converting an alternating electrical current into another alternating electrical current, and able to be connected between the alternating network (12) and the rotor (22) of the electric machine, the bidirectional conversion system (24) comprising:

  ∘ a bidirectional converter (28) for converting an alternating current into a continuous current and able to be connected to the alternating network (12),
  ∘ a bidirectional inverter (30) for converting a continuous current into an alternating current and connected between the AC/DC converter (28) and the rotor (22), the DC/AC inverter (30) comprising controllable electronic switches able to convert a DC voltage into an AC voltage, and a terminal for connection to the rotor (22) for each phase of the AC voltage, and

∘ a device (32) for controlling the switches of the DC/AC inverter (30) according to a control law,

**characterised in that** the control law is such that the active power exchanged by the DC/AC inverter (30) with the rotor (22) is less than 0.3 times the nominal power of the direct current able to circulate between the AC/DC converter (28) and the DC/AC inverter (30), for the frequencies of a target interval of between 0.6 times the stator frequency ($f_{stator}$) and 1.4 times the stator frequency ($f_{stator}$), and such that said exchanged active power is greater than 0.3 times the nominal power, only during a transitory period of less than 30 ms following the occurrence of a fault on the alternating network (12).

2.  Drive chain (16) according to claim 1, wherein the control law is such that the active power exchanged by the DC/AC inverter (30) is less than 0.2 times said nominal power for the frequencies of the target interval.

3.  Drive chain (16) according to claim 1 or 2, wherein the target interval lies between 0.7 times the stator frequency ($f_{stator}$) and 1.3 times the stator frequency ($f_{stator}$), preferably between 0.9 times the stator frequency ($f_{stator}$) and 1.1 times the stator frequency ($f_{stator}$), further preferably between 0.95 times the stator frequency ($f_{stator}$) and 1.05 times the stator frequency ($f_{stator}$).

4.  Drive chain (16) according to any of the preceding claims, also comprising a first sensor (34) for measuring the DC voltage between the AC/DC converter (28) and the DC/AC inverter (30), a second sensor (36) for acquiring the waveform of the alternating current at the terminals of the DC/AC inverter (30), and the control device (32) comprising means (48, 50, 52, 54; 52, 148, 150, 151, 154) for controlling said DC voltage for the frequencies of the target interval.

5.  Drive chain (16) according to claim 4, wherein the control means comprise a regulator (50, 150) for determining a correction of said DC voltage and a pass-band filter (52) for selecting the waveform of the alternating current for the frequencies of the target interval, wherein the lower and upper frequencies of the pass-band filter (52) correspond to the target interval.

6.  Drive chain (16) according to any of the preceding claims, wherein the control law is such that the maximum amplitude of the AC voltage at the terminals of the DC/AC inverter (30), for the frequencies of the target interval, is less than a predefined amplitude frequency which is equal to 0.3 times the nominal voltage of the direct current between the AC/DC converter (28) and the DC/AC inverter (30), preferably equal to 0.2 times said nominal voltage of the direct current, and such that the maximum amplitude of said voltage is greater than the predefined amplitude threshold, only during a transitory period of less than 30 ms following the occurrence of a fault on the alternating network (12).

7.  Drive chain (16) according to any of claims 1 to 5, wherein the control law is such that the power factor (cos φ) of the alternating current at the terminals of the DC/AC inverter (30) is less than a predefined power factor threshold which is equal to 0.3, preferably equal to 0.2, and such that said power factor, for the target interval frequencies, is greater than the predefined power factor threshold, only during a transitory period of less than 30 ms following the occurrence of a fault on the alternating network (12).

8.  Drive chain (16) according to any of the preceding claims, wherein the DC/AC inverter (30) is connected directly to the AC/DC converter (28) via a direct current circulation bus (31), in the absence of a braking chopper connected to the direct current circulation bus (31).

9.  Drive chain (16) according to any of the preceding claims, wherein the DC/AC inverter (30) is connected directly between the AC/DC converter (28) and the rotor (22) in the absence of a protection device against surge voltage and/or surge current connected between the terminals of the DC/AC inverter (30).

10. Installation (10) for generating electrical energy intended for an alternating electrical network (12), the installation (10) comprising a turbine (14) and a drive chain (16) which is firstly connected to the turbine (14) and secondly able to be connected to an alternating network (12), **characterised in that** the drive chain (16) is in accordance with any of the preceding claims, the electric machine (18) being a generator connected to the turbine (14), the stator (20) of the generator being able to be connected to the alternating network (12).

## FIG.1

## FIG.2

## FIG.3

**EP 2 695 275 B1**

## RÉFÉRENCES CITÉES DANS LA DESCRIPTION

**Documents brevets cités dans la description**

- DE 102008009276 A1